# EUROPEAN PATENT APPLICATION

(11) **EP 2 597 721 A1**
(43) Date of publication of application: **29.05.2013**
(21) Application number: 12187749.2
(22) Date of filing: 09.10.2012
(51) Int. Cl.: H01M 10/50, H01B 3/36, H01B 3/34

(54) **Method and device for heating a battery**

(30) Priority: 24.11.2011 FI 20116177
(71) Applicant: Polar Heater Oy, 90440 Kempele (FI)
(72) Inventor: Juvani, Tapio, 90440 Kempele (FI)
(74) Representative: Määttä, Jukka Tapani

(57) **Abstract**

A device (200) for heating a battery of a vehicle is povided. The device has a first part (201), which has a heating element, and the first part is intended for heating some surface of the battery, a shell, which surrounds the first part, and it is manufactured from a flexible material, and a thermostat protrusion (203), which is in the side of the first part, and the thermostat protrusion has a thermostat arrangement and a connection (206) from the heating element to the contact arrangement to the current supply. The thermostat protrusion is of the same material as the shell and is seam-lessly attached to the first part. The thermostat protrusion is arranged to be turned onto some other surface of the battery than the one, which said first part is intended to heat, so that the thermostat arrangement is thus against the other surface of the battery. The thermostat protrusion and the positions of the thermostat arrangement are such that the thermostat arrangement is on the side of the battery beneath the surface level of the battery liquid, when the device is in its place for heating the battery.

## Description

The invention relates to a device for heating a battery of a vehicle, when the battery is in its place in the vehicle, which device has a heating element functioning with supply current for heating the battery, a contact arrangement to a current supply and a thermostat arrangement and a method for using the device for heating a battery.

Vehicles need a battery or batteries as a source of electricity, which batteries are generally charged during driving or externally, such as in vehicles running on electricity. The operation of the battery deteriorates as the temperature falls, which leads to a deteriorated charging capacity, and additionally it is less effective at giving and receiving current when cold. This is a problem in areas, where the temperature is during winter seasons significantly below the freezing point of water during long periods. This is especially problematic in electric and hybrid vehicles, where the electricity taken from the battery is used for moving the vehicle, which makes the use of electric vehicles more difficult in cold conditions. It is generally known in motor-driven vehicles that cold starting them in some cases in very low temperatures takes so much current from the battery that it would be necessary to drive the vehicle for almost an hour in order for the battery to regain the current it lost in the start-up. Over a short distance there is not time to regain this lost current, and the capacity of the battery slowly decreases. Additionally the number of devices and systems consuming current in vehicles has grown and in cold conditions the charge level of the battery very easily falls. The battery cannot last long in cold conditions with such consumption. Sooner or later in such cases the battery empties and the vehicle does not start, even if the engine warmer has been on all night.

The above-described phenomenon occurs both in batteries, where the electrolyte is some liquid, such as in lead batteries, and in so-called dry batteries, such as lithium-ion batteries. Particularly lithium-ion batteries are especially sensitive to temperatures, for which they are not adapted. Too high and too low temperatures shorten the life of the lithium-ion battery. Additionally too low temperatures weaken both its current output capacity and its current intake capacity. In liquid batteries too high temperatures can even cause boiling of the battery liquid and too low temperatures freezing of the battery liquid, if the charge level of the battery falls too low.

Vehicles used in cold conditions generally use engine heaters, which heat up the engine while the vehicle is stationary. These are generally implemented by connecting the engine heater to the supply current. Battery heaters are known, which function with the battery's own current, heating up the battery while the vehicle is stationary. In order for these kinds of heaters not to empty the battery, a charger functioning with supply current installed as an auxiliary device is usually needed for charging the battery during the engine heating. This leads to a rather complicated and expensive solution and additionally it requires an auxiliary device to be installed in the poles of the battery, which auxiliary device should always be in place, which may impede the operation and other use of the battery.

A battery heater is known from patent publication US 5994669, where a battery is installed into a box, which is open at the top, the walls of which have heating elements. These heating elements get their energy from external alternating current or from direct current obtained from another battery. The battery heater has a timer, with which the heater can be switched to a higher effect for some time, for example just before the battery is used. The described battery heater requires empty space around the battery, so that it can be placed in the engine space. Additionally the battery heater presented in the publication requires opening the engine space in order to adjust the timer.

Patent publication US 5281792 presents a system, where a battery of a stationary vehicle is simultaneously heated and charged. Here it is presented that the heating of the battery would be more efficient, if the battery liquid was mobilised during the heating. This is achieved by adding into the engine space an apparatus which charges the battery, which apparatus always charges the battery at the same time as it is heated. The publication mentions that the apparatus is not suitable for charging an empty battery, but it is especially adapted for functioning together with the heating. In the described apparatus the battery receives charging current, even if it is fully charged. Many battery manufacturers do not recommend this, because it can shorten the life expectancy of the battery and in fault situations there may be a danger of overcharge.

An object of the invention is a solution, with which drawbacks and disadvantages related to prior art can be significantly reduced and especially a battery heater can be provided, which would be easy to install and use.

The objects of the invention are obtained with an apparatus and a method, which are characterised in what is presented in the independent claims.

Some advantageous embodiments of the invention are presented in the dependent claims.

The basic idea of the invention is a device for heating a battery, which device has a flat part manufactured from a flexible material, inside which there is a heating element for heating some side of the battery, and in the side of this part there is a protrusion manufactured from the same flexible material, which has conductors between the heating element and a current supply and a thermostat for monitoring the temperature of the battery, and when using the device, the protrusion is bent to some other side of the battery than where the heating part is.

A device according to an embodiment of the invention for heating a battery of a vehicle, when the battery is in place in the vehicle, has a heating element functioning with supply current for heating the battery, a contact arrangement to a current supply and a thermostat arrangement. The thermostat arrangement ensures that the battery does not overheat during the heating, and the temperature of the battery can be kept even. According to an advantageous embodiment of the invention the device additionally has a first part, which has a heating element and which is intended for heating some surface of the battery, which surfaces are the sides and bottom of the battery. The device additionally has a shell, which surrounds the first part and which is manufactured from a flexible material, and a thermostat protrusion, which is in the side of the first part and which has a thermostat arrangement and a connection from the heating element to the contact arrangement to the current supply. The thermostat protrusion is of the same material as said shell and seamlessly attached to the first part, and it is arranged to be turnable onto some other surface of the battery than the one which said first part is intended to heat, so that the thermostat arrangement is thus against said second surface of the battery. This surface is one of the sides of the battery, and the location of the thermostat arrangement, when the device is in place for heating the battery, is on said side of the battery beneath the electrolyte surface level, when the battery is in its use position. The electrolyte can be a liquid or a solid substance.

In an embodiment of the device according to the invention the thermostat protrusion and the position of the thermostat arrangement in the thermostat protrusion is arranged so that the position of the thermostat arrangement, when the device is in place for heating the battery, is on the side of the battery in the upper half of said side, when the battery is in its use position.

In a second embodiment of the device according to the invention the thermostat arrangement is substantially in the end of the thermostat protrusion, which is farther from the side of the first part, where the thermostat protrusion is.

In a third embodiment of the device according to the invention the shell in the thermostat protrusion is arranged to protect the thermostat arrangement and the connection to the contact arrangement to the current supply, and the shell is substantially liquid- and gas-tight.

In a fourth embodiment of the device according to the invention the first part substantially shaped like the side of the battery, which said first part is intended to heat.

In a fifth embodiment of the device according to the invention there are one or more additional parts in one or more sides of the first part, which additional part has a heating element inside the shell, which heating element continues from the heating element of the first part, and the shell between the first part and the shell of the additional part or parts is seamless, and the additional part is arranged to be bendable so that when the device is in place it settles against a surface of the battery, which surface is beside the surface of the battery, which the first part is intended to heat, and which surface is a different surface than the second surface of the battery, onto which the thermostat protrusion is arranged to be turned.

In a sixth embodiment of the device according to the invention there are two or more thermostat arrangements and they are in series together and with the heating element.

In a seventh embodiment of the device according to the invention the contact arrangement of the device to the current supply is connected to the electric system of the engine heater of the vehicle and therefrom to the supply current.

In an eighth embodiment of the device according to the invention some part of the device, the first part or an additional part, is arranged to heat the bottom of the battery. In a ninth embodiment of the device according to the invention an insulation part has been attached to the part of the heater, the first part or an additional part, which is intended to be against the bottom of the battery to heat the bottom, so that the insulation part is between said part of the heater, the first part or additional part, and the frame of the vehicle, when the device is in place.

In a tenth embodiment of the device according to the invention the heating effect of the device is a maximum of 4 W/kg in relation to the weight of the battery or a maximum of 0.2 W/cm² in relation to the heating surface of the device.

In a method according to the invention for heating a battery the device according to the invention is placed to heat the battery of a vehicle. The heating occurs while the vehicle is stationary in such a place that a connection to the supply current is possible. The method is especially adaptable for use in ground vehicles.

In an embodiment of the method according to the invention the grounding conductor in the contact arrangement to the current supply is left unconnected. This is the situation especially when the electricity transfer system of the engine heater of the vehicle is used as a current supply for the heating device. The heating element does not need grounding, because the shell of the element is in itself an insulation and the wiring of the engine heater must according to regulations be grounded to the frame of the vehicle. Thus the electricity network's own fuse and fault current protections are sufficient in fault current or short circuit cases.

In an embodiment of the method according to the invention a temperature T1 has been set for the thermostat arrangement in the thermostat protrusion, and the thermostat arrangement shuts off the current to the heating element, if the temperature measured by the thermostat arrangement exceeds the set temperature T1. In a second embodiment of the method according to the invention a temperature T2 has been set for the thermostat arrangement in the thermostat protrusion, and the thermostat arrangement switches on the current to the heating element, if the temperature measured by the thermostat arrangement falls under the set temperature T2, and T2 is lower than T1. In a third embodiment of the method according to the invention there are two or more thermostat arrangements in the thermostat protrusion and the current to the heating element is shut off, if the temperature measured by one thermostat arrangement exceeds the set temperature T1, and the current is switched on, if the temperature measured by all thermostat arrangements falls under the temperature T2, and T2 is lower than T1.

An advantage of the invention is that it can be used to improve use reliability of a vehicle in cold conditions. The invention can further be used to improve the life expectancy and operating reliability of a battery. The invention can further be adapted for all kinds of vehicle batteries.

An advantage of the invention is further that it can be used for producing a battery heater, which is simple and easy to install. The battery heater according to the invention further takes little space, whereby it can be installed also in batteries placed in tight spaces. With the battery heater according to the invention the production and installation costs can be made lower than with previously known products. The invention additionally provides a battery heater, which during operation does not drain the battery in any way.

The battery heater according to the invention can be moved from one vehicle to another. Additionally the same kind of battery heater is suitable for many different battery types. The battery element can also easily be manufactured according to the dimensions of the battery.

An advantage is also that the battery heater according to the invention does not contain parts, which would require service or adjustment, which improves the comfort of use.

The invention further improves the safety of the battery heater by monitoring the temperature of the battery in a reliable way and by providing a battery heater, which has as few parts as possible, which could cause potentially dangerous fault situations. The safety of the device is also increased by the fact that all the components of the device can be closed into the same insulation material in a gas-and liquid-tight manner.

In the following, the invention will be described in detail. In the description, reference is made to the enclosed drawings, in which
- Figure 1: shows as an example a connection diagram of a battery heater according to the invention,
- Figure 2: shows an example of a battery heater according to the invention,
- Figure 3: shows the battery heater of Figure 2 positioned in place to heat a battery, examined from above,
- Figure 4: shows the battery heater of Figure 2 positioned in place to heat a battery, examined diagonally from above,
- Figure 5: shows a second example of a battery heater according to the invention,
- Figure 6: shows a third example of a battery heater according to the invention,
- Figure 7: shows a fourth example of a battery heater according to the invention,
- Figure 8: shows a fifth example of a battery heater according to the invention,
- Figure 9: shows an example of the connection of a battery heater according to the invention to the heating system of the engine space of a vehicle,
- Figure 10: shows an example of an arrangement, which has two battery heaters according to the invention connected parallel to heat two batteries in a vehicle and
- Figure 11: shows a cross-section of the first part of the battery heater of Figure 2.

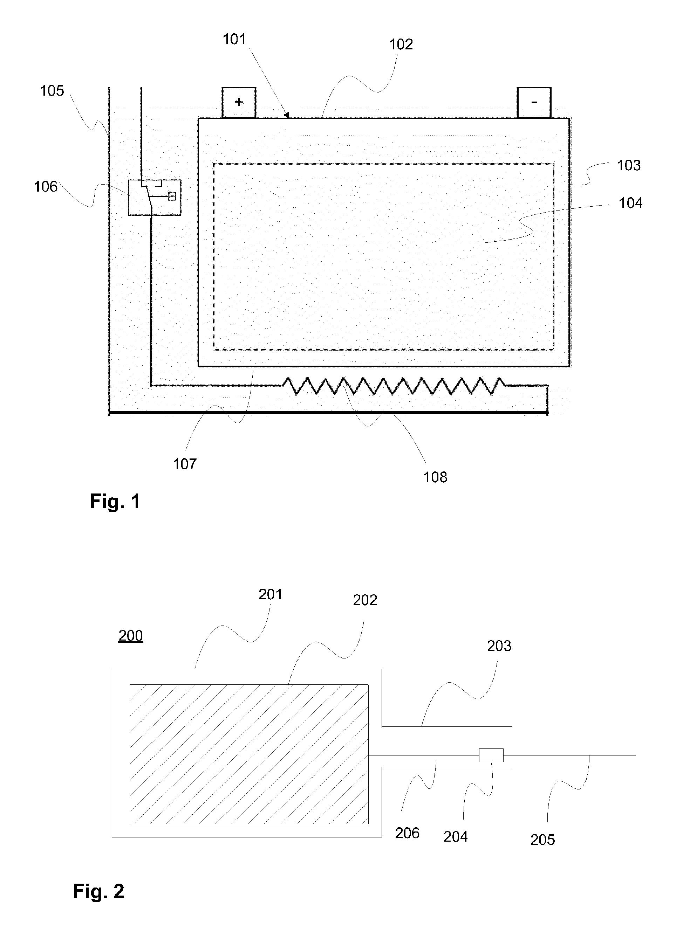

Figure 1 shows as an example a connection diagram of a battery heater according to the invention. The figure shows the battery 101 of a vehicle. The battery has an upper surface 102, a bottom 107 and sides 103, which are between the upper surface and the bottom. These parts are defined according to the use position of the battery. Inside the battery there is battery liquid 104. The battery is arranged to be heated by a battery heater when the vehicle is stationary. The battery heater has a contact arrangement 105 to a current supply, a thermostat arrangement 106 and a heating element 108. The current supply of the battery heater is outside the vehicle, so that the energy resources of the vehicle are not used. The current supply is supply current. The heating element for example consists of filament or metal film resistors. What is essential is that the heating element heats up, when supply current is led through it. The heating element is placed against at least one surface of the battery suitable for heating. These surfaces are the sides and bottom of the battery. On the upper surface of the battery are the poles of the battery, contact means to the battery charging device and the parts of the vehicle requiring electricity and other parts related to the operation of the battery. Thus it would be difficult to place the heating element on the upper surface. A heated heating element heats the surface of the battery. The heat is conducted to the inside of the battery and the battery liquid and the battery cells heat up, whereby the electrochemical operation of the battery is boosted. The thermostat arrangement is placed on some side surface of the battery. The thermostat arrangement advantageously settles in such a point on the side of the battery that it is below the upper surface of the battery liquid when the battery is in its use position. The thermostat arrangement is placed in series with the heating element. The thermostat arrangement observes the temperature, and it has means for shutting off and switching on the current based on this observed temperature. When the temperature measured by the thermostat arrangement in the side of the battery reaches some specific value T1, the thermostat arrangement shuts off the supply current to the heating element. The thermostat arrangement additionally has some other value T2, where it switches on the supply current to the heating element. T2 is lower than T1. There are many existing circuits or solutions for implementing the thermostat arrangement, in which solutions circuits and components are connected. The temperatures T1 and T2 of the thermostat arrangement are advantageously already installed, so that the user of the device 200 does not have to adjust them, i.e. the temperatures are set in a fixed manner.

There can also be several thermostat arrangements, and thus, if one of them reaches the value T1, the supply current is shut off, and if all of them reach the value T2, the supply current is switched on. Several thermostats further increase the reliability and the safety can be improved. Using several thermostats provides monitoring of temperature over a wider area on the side of the battery. When using several thermostat arrangements they are advantageously connected in series. Connecting in series increases the safety, because one thermostat arrangement suffices for shutting off the current supply, and correspondingly all thermostat arrangements must detect T2 in order for the supply current to be switched on.

Although the example of Figure 1 uses a battery, which contains liquid, the device according to the invention can also be used with other types of batteries, where a substance in some other state is used as electrolyte. What is essential is that the thermostat arrangement is in the side of the battery in a point, which is below the upper level of the electrolyte, when the battery is in its use position. The electrolyte can be in the battery for example inside the cells.

Figure 2 shows an example of a device 200 for heating a battery according to the invention. The device has a first part 201, a heating element 202, a thermostat protrusion 203, a thermostat arrangement 204, a connection 206 and a contact arrangement 205 to a current supply.

The first part 201 is in this example shaped as a rectangle. The thickness of the first part 201 is small compared to its other dimensions. Thus the first part is a thin plate. The first part is manufactured from a flexible material, i.e. it can be bent. Inside the first part is a heating element 202, which is formed for example from resistance filaments or film, which heat up when an electric current runs through them. This electric current is supply current obtained from the electrical network. The heating element can also be bent.

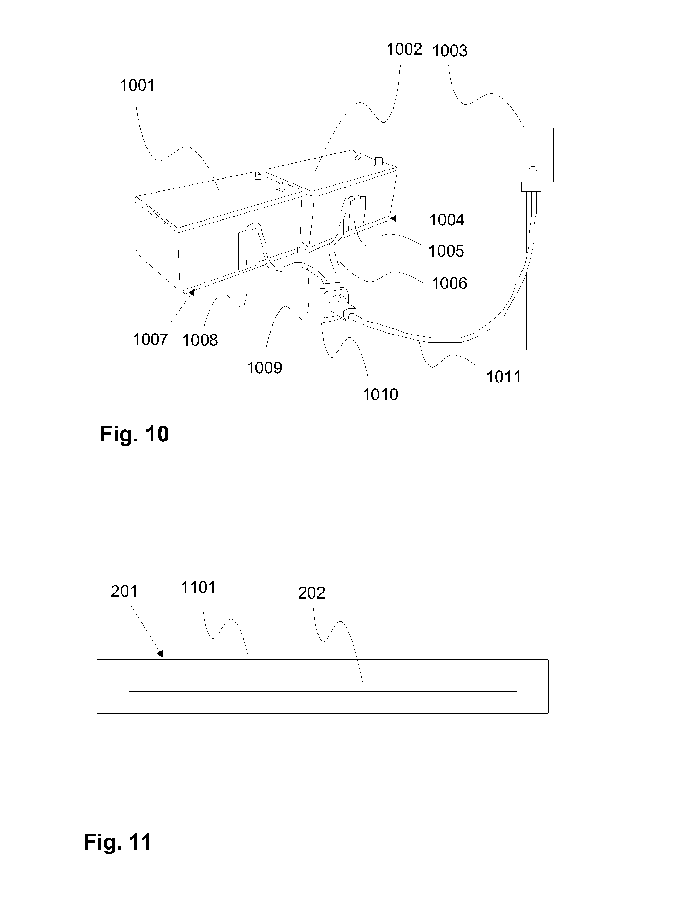

The flexible part surrounding the heating element 202 of the first part 201 is herein called a shell. Figure 11 shows a cross-section of the first part. The shell 1101 surrounds the heating element so that it protects it from all sides. The shell is also made of an electrically insulating material. The shell can for example be silicone or some silicone-based material, such as silicone rubber or another material suited for the purpose. The use temperature limits of silicone rubber are -60 °C - +250 °C, so it is applicable for the solution according to the invention. Additionally the material must be suitable for the conditions in an engine and must withstand possible fault states, such as for example being subjected to battery liquid. The first part can be formed for example from two silicone rubber plates shaped like the first part, between which plates the heating element is placed, and the silicone rubber plates are attached together. This can for example be done by vulcanising and pressing the parts in high temperature and pressing them into shape with a compressor. The shell can for example also be extruded or cast into a mould. The shell can have different thicknesses on different sides of the heating element. Thus the first part can have a heating side toward the battery and a side away from the battery.

In Figure 2 there is a thermostat protrusion 203 in the side of the first part 201. In the case according to the example it is an elongated parallelogram, which is attached by its narrow side to the side of the first part. The end, by which the thermostat protrusion is attached to the first part, is the first end, and the end, which in the position according to Figure 2 is further from the first part, is the second end. This narrow side of the thermostat protrusion is shorter than the side of the first part, to which the thermostat protrusion is attached. Other solutions for the shape of the thermostat protrusion are also possible. The thermostat protrusion is of the same material as the first part and it is seamlessly attached to the first part. The thermostat protrusion is advantageously formed at the same time as the first part. Thus there are two plates, for example silicone rubber plates, shaped as the first part and the thermostat protrusion, between which the heating element and other parts of the device according to the invention are placed. These parts of the device according to the invention are advantageously inside the shell in a gas- and liquid-tight manner, i.e. the environment cannot affect the device. These can for example be battery liquids, gasses from the battery, exhaust gasses, oils, anti-freeze, fuel, water splatter and the like. Some types of batteries may in a charging situation or when damaged develop hydrogen gas, which can in some circumstances cause an explosion. Therefore it is advantageous for the battery heater to be as safe as possible.

The thermostat protrusion 203 has a thermostat arrangement 204 and a connection 206, which are inside the thermostat protrusion, protected by the shell. The connection connects the heating element 202 and the contact arrangement 205 to the current supply. The thermostat arrangement is placed so in the thermostat protrusion that when turning the thermostat protrusion against the side of the battery, the thermostat arrangement settles in such a point on the side of the battery that it is beneath the upper surface of the battery liquid or beneath the upper surface of the battery cells. This point is advantageously in the upper half of the side, onto which the thermostat protrusion is turned, as is seen from the figures. The upper half means the part which is higher when the battery is in its use position, as if the side of the battery was divided in the horizontal direction substantially into two equally large parts. Because heat is conducted upwards inside the battery, it is useful to place the thermostat arrangement in the upper part of the side, but still so that a temperature is measured, which is proportional to the temperature of the inner structures of the battery. The thermostat protrusion has an arrangement, with which the connection and the contact arrangement 205 to the current supply are connected. This is advantageously placed close to the thermostat arrangement, so that these can be protected together for example with some structure. These are placed in the second end of the thermostat protrusion. Thus the contact arrangement to the current supply can be connected to the second end of the thermostat protrusion. The contact arrangement can be connected to the device 200 also from some other point, but the wiring is arranged to run via the thermostat arrangement, so that the supply current can be shut off when the thermostat arrangement detects the set temperature value T1 or switched on when the battery cools down below the limit value T2. The thermostat arrangement is advantageously placed so that the heating element does not affect the operation of the thermostat arrangement, i.e. the thermostat arrangement does not measure the temperature of the heating element but the temperature of the side of the battery, which is proportional to the internal temperature of the battery. Controlling the heat and especially keeping it even is particularly significant with lithium-ion batteries and the like.

The contact arrangement 205 to the current supply can be a wire, which is connected to some electrical system or supply, or a connector or the like, which can be connected to the wire. The contact arrangement can for example be an insulated electrical wire, which is connected to the electrical system of the engine heater of the vehicle, or a socket in the thermostat protrusion, to which the electrical wire can be connected.

The connection 206 connects the heating element 202 and the thermostat arrangement 204 and the contact arrangement 205 to the current supply, so that the electric current from the current supply can run through the heating element and the thermostat arrangement. The connection is inside the thermostat protrusion. The connection can also extend inside the first part 201.

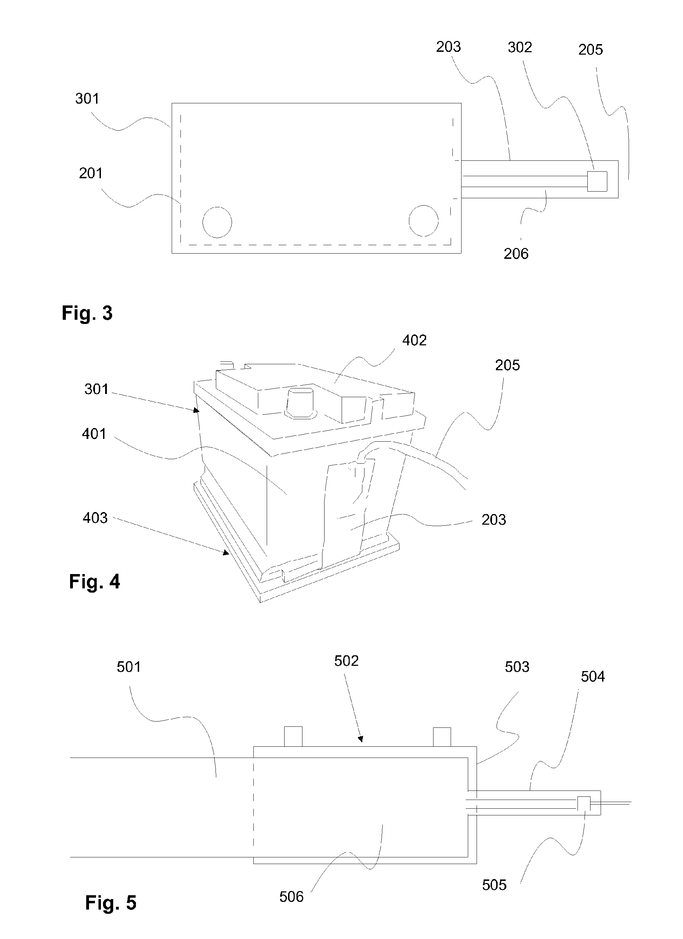

Figure 3 shows the device of Figure 2, which is being positioned for heating a battery 301, examined from the direction of the upper surface of the battery. The first part 201 is placed beneath the bottom of the battery, so that the heating element heats the bottom of the battery. The first part is thus between the battery and the frame of the vehicle. Because the battery itself is quite heavy and it has an arrangement for attaching the battery, the first part does not necessarily need to be attached anywhere. The weight of the battery keeps the first part in its place. Because the first part is thin compared to the battery, no changes need to be made to the original attaching arrangement of the battery. This is useful especially in modern vehicle engines, the space solutions of which are very optimised, i.e. they do not have very much surplus space. The shape and size of the first part is selected so that it is substantially shaped like the bottom of the battery, whereby the heating is even. The thermostat protrusion 203 is shaped so that it does not remain beneath the battery. In the second end of the thermostat protrusion there is a protective casing 302 for the thermostat arrangement and for the arrangement for connecting the connection 206 and the contact arrangement 205 to the current supply. The protective casing protects said components. It is positioned so that the temperature measuring of the thermostat arrangement is not disturbed.

Figure 4 shows the device of Figure 2 in it place for heating a battery 301, examined diagonally from above. The battery has an upper surface 402, sides 401 and a bottom (not seen in the figure). The first part of the device is beneath the bottom of the battery. In this example an insulation part 403 is placed between the first part and the frame of the vehicle. This is positioned so that conduction of heat to the frame of the vehicle is prevented. The shape and dimensions of the insulation part are such that no changes need to be made to the original attaching of the battery. The insulation part can for example be made of cellular plastic, and its thickness can be 5-10 mm. Thus the heat produced by the heating element is mainly conducted to the battery. The insulation can be put in its place separately or it can be attached in advance to one side of the first part. The first part can also be shaped so that the shell forms an insulation part on its one side, i.e. the shell is thicker on one side of the first part.

The first part is placed beneath the battery, so that the thermostat protrusion 203 is not left beneath the battery. Because the thermostat protrusion is formed from the same flexible shell material as the first part, it can be bent. The thermostat protrusion is bent against the side 401 of the battery, so that the thermostat arrangement is against the side. The thermostat protrusion is attached to the side of the battery for example with double-sided tape, a cable tie, a belt which can be tightened or another corresponding attaching arrangement. At the same time the contact arrangement 205 to the current supply attached in the second end of the thermostat protrusion can also be placed in such a position that it can be attached to the engine space as solidly and easily as possible. The shape of the thermostat protrusion is such that the thermostat arrangement can be placed on the side of the battery close to the upper edge of the battery cells, whereby the measured temperature is proportional to the temperature of the battery liquid. The thermostat protrusion does not need to be against the surface of the battery; it is enough that the part of the thermostat protrusion, where the thermostat arrangement is, comes into contact with the surface of the battery. The thermostat protrusion can thus be bent or straight when set into place.

In tests, the effect of the heating element has been shown to be 45-70 watts for a battery in the magnitude of that of a car. For batteries of larger mass, such as the batteries of lorries or busses, the effect of the heating element must correspondingly be higher, such as for example 70-200 watts. In winter conditions during 8 hours of continuous use, the temperature of the battery of a car equipped with a 60 watt battery heater according to the invention did not rise above 27 °C. The switch-off limit T1 of the thermostat arrangement of the heater was based on tests selected as 27 °C, and the switch-on value T2 as 20 °C. The temperature of the battery liquid on average remained at room temperature. The thermostat values can also be some others, but a too high battery temperature wears the battery and shortens its life expectancy. With one solution according to the invention cold battery liquid at the beginning heats up by about 12-15 °C per hour of heating. Later the temperature rise slows down, when the battery starts to give off surplus heat into its environment as the shells of the battery heat up. The time needed for heating up the engine of the vehicle, about 2-3 hours, well suffices for raising the temperature of the battery to readouts, which correspond to the readouts of a warm point in time. In tests it has been detected that after the vehicle is started, when the current of the battery heater is shut off, the battery retained its temperature for a long time as the thermal energy evened out in the battery. The battery liquid even slightly heats up as the heating element stops, and again as the battery cools down, the surface temperature of the battery correspondingly falls faster than the temperature of the battery liquid. Due to this property, when starting to move after start-up, the battery remains warm for a long time and can immediately receive back the current it lost during the start-up in full. The advantage is particularly clear when driving a short distance, whereby it is important to regain the current lost during start-up efficiently and quickly.

The heating effect of the device has maximum values, which should not be exceeded. The heating effect of the device is in relation to the weight of the battery a maximum of 4 W/kg, i.e. 4 watts per kilo of weight of the battery. Correspondingly the effect is in relation to the heating surface area a maximum of 0.2 W/cm². It should be noted that these are not mutually exclusive, but for example a device, the effect of which in relation to the heating surface area of the device does not exceed the maximum value, can exceed the maximum mass effect. With this dimensioning of the effect, too high surface temperatures can be removed from the surface of the battery. Additionally the dimensioning of the maximum effect prevents overheating of the battery if the thermostat fails. In one embodiment, when testing a fail situation of a 60 watt device, the temperature of the car battery did not rise above 35 °C.

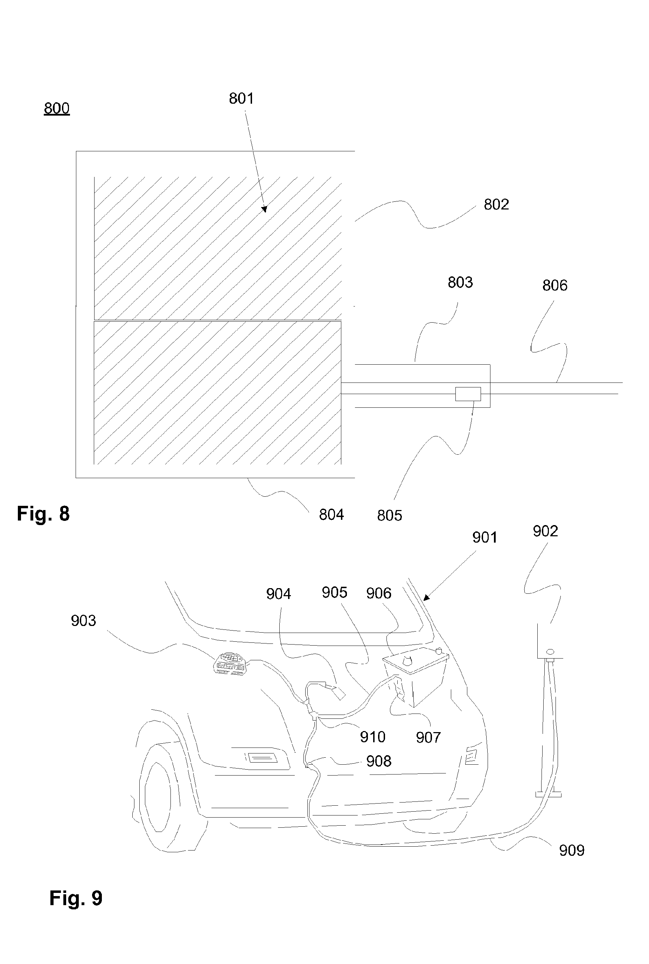

Figure 5 shows a second example of a device for heating a battery 502 according to the invention. The device has a first part 506, a thermostat protrusion 504 and a thermostat arrangement 505, which can be protected by a protective casing. The device additionally has an additional part 501. The additional part is in the side of the first part. The additional part is formed to connect seamlessly to the shell of the first part. The shell of the additional part is of the same material as in the first part. Inside the additional part there is a heating element, which is part of the same heating element as in the first part. The additional part is intended to heat some surface of the battery, which surface is beside the surface, which the first part is intended to heat. In the case according to the invention the first part is positioned to heat the long side of the battery and the additional part is in the side of the first part, which is opposite to the side, where the thermostat protrusion is. The additional part can be bent to heat the end side of the battery, and the thermostat protrusion can be bent onto the second end side of the battery, so that the thermostat arrangement measures the temperature. The structure of the heating element is selected so that it can be bent. The heating element can be protected for example so that there is electric wiring in the bend between the first part and the additional part, with which electric wiring the parts of the first part and additional part of the heating element are connected. The structure of the heating element can in said bend also be altered to better withstand bending. Figure 8 shows an example of the placement of a heating element between the first part and the additional part.

The additional part 501 is formed in the same way as the thermostat protrusion 504. Thus there are two for example silicone rubber plates, shaped as the first part, the thermostat protrusion and the additional part, between which the heating element and other parts of the device according to the invention are placed. These plates are attached together in a manner required by the material, which may for example be by heating. The manufacturing can also be realised by mould casting or extruding. In the case according to the example the width of the side of the additional part is as great as the width of the side of the first part, but it can also be some other. There can also be more than one additional part. An additional part can also be attached to the additional part. The additional parts can be attached to the battery in the same way as the thermostat protrusion, but for example when using tape the effect of the heating element in the additional part on the attaching arrangement should be taken into account. Other possible attaching manners can for example be belts, straps, gluing or the like.

The arrangement according to Figure 5 can for example be necessary, if it is desired to position the device for heating the battery without detaching the battery from its place.

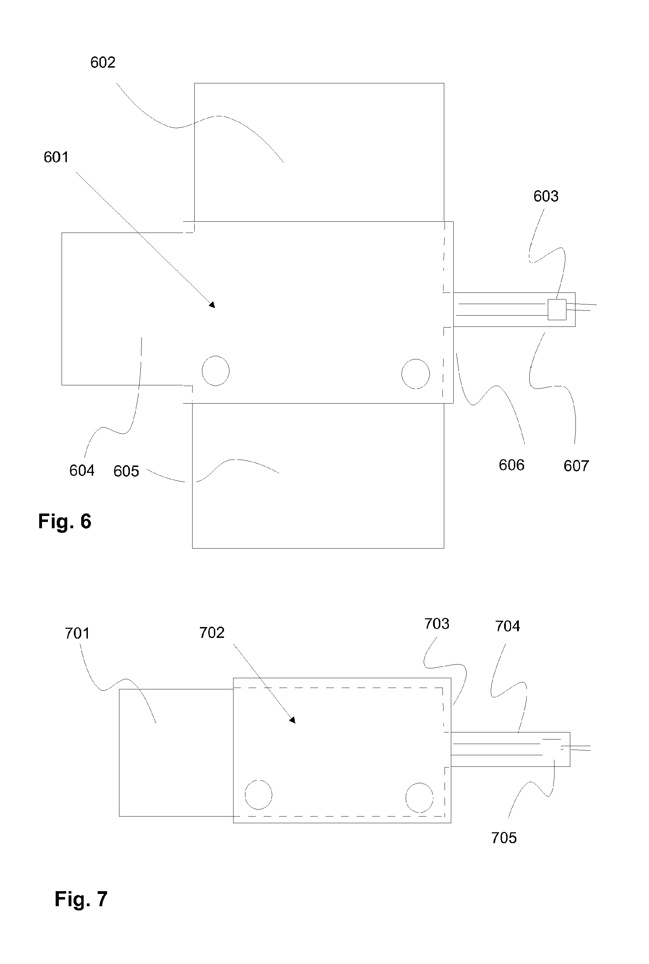

Figure 6 shows a third example of a device for heating a battery 601 according to the invention. The device has a first part, which in the figure is beneath the battery, and its edges are marked with a dotted line, a thermostat protrusion 607 and a thermostat arrangement 603, which can be protected by a protective casing. The device additionally has a first additional part 602, a second additional part 604 and a third additional part 605, which are attached to the sides of the first part, so that each additional part and the thermostat protrusion are at their own side. The embodiment according to the example provides a device, which heats a battery from three sides and from the bottom of the battery and where the thermostat protrusion is on its own side 606. Such a solution may be necessary, if a low-effect heating element is used for heating a battery with a large mass. This may be for example in a hybrid or electric car. Also in this embodiment the side 606 of the battery, where the thermostat protrusion is, is left free from heating parts.

Insulation material can also be placed around the battery or on some if its sides. Thus the insulation material is placed on the device, if the device according to the invention heats some side of the battery, where it is intended to place insulation material. In tests in winter conditions at -30 °C below zero a 10 mm cellular plastic insulation was used around the battery, whereby the battery heating was switched on for two hours and 80 % of current was obtained from the battery, which well sufficed for start-up. After the heating period ended the battery liquid remained warm for several hours, and 70 % of current was obtained from the battery even after 10 hours, which well sufficed for start-up. It should be noted that also the side, where the thermostat protrusion is, can be covered with insulation material.

Figure 7 shows a fourth example of a device for heating a battery 702 according to the invention. The device has a first part, which in the figure is beneath the battery, and its edges are marked with a dotted line, a thermostat protrusion 704, a thermostat arrangement 705, which can be protected by a protective casing, and an additional part 701. The example is in practice the same as the one presented in Figure 5, but here the device is arranged so that the first part settles beneath the battery and the additional part is bent onto the end side of the battery. Thus the additional part is of such a size that it does not extend onto the upper surface of the battery. In the example of Figure 5 the additional part can be longer than the width of the end side of the battery, because it can be arranged to be bent further onto the second long side. Thus battery heaters according to the invention can be manufactured, in which one battery heater can be used for heating batteries of different dimensions.

Figure 8 shows a fifth example of a device 800 according to the invention. The device has a first part 804, an additional part 802, a thermostat protrusion 803, a thermostat arrangement 805, a contact arrangement 806 to a current supply and a heating element 801. In the case according to the example the heating element extends from the first part to the additional part. In the figure the discontinuity point in the heating element illustrates the bending point between the first part and the additional part. The heating element is continuous, and its structure is selected so that it withstands the bending. In the example according to the figure the battery to be heated can be placed either on the first part or on the additional part. If the battery is placed on the first part, the additional part is bent against the side of the battery and the thermostat protrusion is bent onto the side of the battery according to the example of Figure 4. If on the other hand the battery is placed on the additional part, the first part is bent against the side of the battery and the thermostat protrusion is bent onto the side of the battery according to the example of Figure 5, i.e. thus the thermostat protrusion is substantially in the direction of the surface of the battery. In both cases the position of the thermostat arrangement on the side of the battery can, if necessary, be selected by bending the thermostat protrusion.

Figure 9 shows an example of connecting a battery heater according to the invention to the heating system in the engine space of a vehicle 901. For heating the engine of the vehicle there is an engine heater 904 and an interior heater 903 of the vehicle. These are connected to the electric system, which has an external connector 908. This external connector is in the vehicle advantageously in such a point that it is accessible without opening the engine bonnet. A conductor 909 can be connected to this connector, with which conductor said electric system can be connected to a supply current source 902. Thus electric current can be obtained for the heating system of the engine space. In the engine space of the vehicle there is a battery 906, which is arranged to be heated with a device 907 according to the invention. A connector 910 is connected to the electric system of the heating system in the engine space, to which connector the contact arrangement 905 to the current supply can be connected in order to bring electric current to the device for heating the battery. Said connector is advantageously according to standards, whereby connecting it is easy. When switching on the heating system in the engine space with the arrangement according to the figure the battery heater 907 according to the invention is also switched on. The heating effect of the battery heater is selected so that the battery is heated during the normal heating of the engine. This time is generally about 1-3 hours.

Figure 10 shows an example of an arrangement, which has two battery heaters according to the invention connected parallel to heat two batteries in a vehicle. For the sake of clarity the vehicle has been left out of the figure. The vehicle has a first battery 1001 and a second batter 1002. A first battery heater 1008 and a second battery heater 1005 have been arranged for heating these. The battery heaters are insulated from the frame of the vehicle with a first insulation part 1007 and a second insulation part 1004. The battery heaters have a first contact arrangement 1009 and a second contact arrangement 1006 for connecting to a current supply. The contact arrangements are connected to a connector 1010. The connector is advantageously according to standards. One possible connector is a socket-type, which is used for example in camping vehicles, when they are connected to the supply current. A conductor 1011 is connected to the connector, which conductor is in contact with the supply current source 1003. Such an arrangement is useful if it is desired to separate the engine heater and the battery heater, for example if the battery heater has high effect or there are several battery heaters or if it is desired to place the battery heater in a vehicle, which does not have an engine heater.

Some advantageous embodiments according to the invention have been described above. The invention is not limited to the solutions described above, but the inventive idea can be applied in numerous ways within the scope of the claims.

## Claims

1. A device (200, 800) for heating a battery (101, 301, 502, 601, 702, 906, 1001, 1002) of a vehicle (901), when the battery is in its place in the vehicle, which device has a heating element (108, 202, 801) functioning with supply current for heating the battery, a contact arrangement (105, 205, 804, 905) to a current supply, a thermostat arrangement (106, 204, 505, 603, 705, 805), a first part (201, 506, 804), where said heating element is, and a shell (1101), which surrounds the first part and which is manufactured from a flexible material, **characterised in that** the first part is intended for heating some surface of the battery, which surfaces are the sides (103, 401, 503, 606, 703) and the bottom (107) of the battery, and which device additionally has
- a thermostat protrusion (203, 504, 607, 704, 803), which is in the side of the first part and which has a thermostat arrangement and a connection (206) from the heating element to the contact arrangement to the current supply, and the thermostat protrusion is of the same material as said shell, and the thermostat protrusion is seamlessly attached to the first part, and the thermostat protrusion is arranged to be turned onto some other surface of the battery than onto the one which said first part is intended to heat, so that the thermostat arrangement is thus against said other surface of the battery, and the position of the thermostat arrangement in the thermostat protrusion is arranged so that the position of the thermostat arrangement, when the device is in its place for heating the battery, is on the side of the battery beneath the surface level of the electrolyte of the battery, when the battery is in its use position.

2. The device (200, 800) according to claim 1, **characterised in that** the position of the thermostat arrangement, when the device is in its place for heating the battery, is on the side of the battery in the upper half of said side, when the battery is in its use position.

3. The device (200, 800) according to any of the claims 1-2, **characterised in that** the thermostat arrangement (106, 204, 505, 603, 705, 805) is substantially in the end of the thermostat protrusion (203, 504, 607, 704, 803), which end is further from the side of the first part (201, 506, 804), where the thermostat protrusion is.

4. The device (200, 800) according to any of the claims 1-3, **characterised in that** the shell in the thermostat protrusion (203, 504, 607, 704, 803) is arranged to protect the thermostat arrangement (106, 204, 505, 603, 705, 805) and the connection (206) and the shell is substantially liquid- and gas-tight.

5. The device (200, 800) according to any of the claims 1-4, **characterised in that** the first part (201, 506, 804) is substantially shaped like the surface of the battery, which surface said first part is intended to heat.

6. The device (200, 800) according to any of the claims 1-5, **characterised in that** there are one or more additional parts (501; 602, 604, 605; 701; 802) in one or more sides of the first part (201, 506, 804), which additional part has a heating element inside the shell (1101), which heating element (108, 202, 801) continues from the heating element of the first part, and the shell between the first part and the shell of the additional part or parts is seamless, and the additional part (501; 602, 604, 605; 701; 802) is arranged to be bendable so that when the device is in place is settles against a surface to be heated of the battery, which surface is beside the surface of the battery, which the first part (201, 506, 804) is intended to heat, and which surface is a different surface than the second surface of the battery, onto which the thermostat protrusion is arranged to be turned.

7. The device (200, 800) according to any of the claims 1-6, **characterised in that** there are two or more thermostat arrangements (106, 204, 505, 603, 705, 805) and they are in series together and with the heating element (108, 202, 801).

8. The device (200, 800) according to any of the claims 1-7, **characterised in that** the device's contact arrangement (105, 205, 806, 905) to the current supply is connected to the electrical system in the engine heater of the vehicle (901) and therefrom to the supply current.

9. The device (200, 800) according to any of the claim 1-8, **characterised in that** some part of the device, the first part (201, 506, 804) or an additional part (501; 602, 604, 605; 701; 802), is arranged to heat the bottom (107) of the battery.

10. The device (200, 800) according to claim 9, **characterised in that** an insulation part (403, 1004, 1007) has been attached to the part of the heater, the first part (201, 506, 804) or an additional part (501; 602, 604, 605; 701; 802), which is intended to be against the bottom (107) of the battery to heat the bottom, so that the insulation part is between said part of the heater, the first part or additional part, and the frame of the vehicle (901), when the device is in place.

11. The device (200, 800) according to any of the claims 1-10, **characterised in that** the heating effect of the device is a maximum of 4 W/kg in relation to the weight of the battery or a maximum of 0.2 W/cm² in relation to the heating surface area of the device.

12. A method for heating a battery (101, 301, 502, 601, 702, 906, 1001, 1002) of a vehicle (901), **characterised in that** the method comprises placing a device according to claim 1 to heat said battery.

13. The method according to claim 12, **characterised in that** the thermostat arrangement (106, 204, 505, 603, 705, 805) in the thermostat protrusion (203, 504, 607, 704, 803) is given a temperature T1 and the thermostat arrangement shuts off the current to the heating element (108, 202, 801), if the temperature measured by the thermostat arrangement exceeds the set temperature T1.

14. The method according to claim 13, **characterised in that** the thermostat arrangement (106, 204, 505, 603, 705, 805) in the thermostat protrusion (203, 504, 607, 704, 803) is given a temperature T2 and the thermostat arrangement switches on the current to the heating element (108, 202, 801), if the temperature measured by the thermostat arrangement falls under the set temperature T2, and T2 is smaller than T1.

15. The method according to claim 12, **characterised in that** the thermostat protrusion (203, 504, 607, 704, 803) has two or more thermostat arrangements (106, 204, 505, 603, 705, 805) and the current to the heating element (108, 202, 801) is shut off, if the temperature measured by one thermostat arrangement exceeds the set temperature T1, and the current is switched on, if the temperature measured by all the thermostat arrangements falls under the temperature T2, and T2 is smaller than T1.
